# EUROPÄISCHE PATENTSCHRIFT

(11) **EP 1 342 925 B1**
(45) Veröffentlichungstag und Bekanntmachung des Hinweises auf die Patenterteilung: **20.07.2005**
(21) Anmeldenummer: 03003740.2
(22) Anmeldetag: 19.02.2003
(51) Int. Cl.: F15B 15/10, F15B 15/28

(54) **Kontraktionseinheit mit Positionssensoreinrichtung**
Contraction unit with position sensing device
Unité de contraction avec dispositif de capteur de position

(30) Priorität: 08.03.2002 DE 10210332
(43) Veröffentlichungstag der Anmeldung: 10.09.2003
(73) Patentinhaber: FESTO AG & Co, 73734 Esslingen (DE)
(72) Erfinder: Reininger, Thomas, Dr., 73249 Wernau/Neckar (DE)
(74) Vertreter: Vetter, Hans, Dipl.-Phys. Dr.

(56) Entgegenhaltungen:
- EP-A- 0 161 750
- DE-U- 20 112 633
- DE-U- 29 906 626
- DE-U- 29 908 008
- GB-A- 2 089 890
- US-A- 4 860 639
- US-A- 5 095 756
- US-A- 5 218 280

## Beschreibung

Die Erfindung betrifft eine Kontraktionseinheit mit einem sich zwischen zwei beabstandeten Kopfstücken erstreckenden und bei Innendruckbeaufschlagung eine Längskontraktion erfahrenden Kontraktionsschlauch gemäß dem Oberbegriff des Anspruchs 1.

Kontraktionseinheiten sind beispielsweise aus dem von der Anmelderin herausgegebenen Prospekt "Fluidic Muscle", der EP 0161750 B1, der DE 29906626 U, der DE 29908008 U oder der DE 20112633 U bekannt und sind für eine sehr präzise Positionierung bei einfachem und verschleißarmem Aufbau und relativ geringen Kosten geeignet. Dabei können sehr hohe Stellkräfte erzielt werden.

Für die exakte Positionierung werden prinzipiell bei Stellgliedern jeglicher Art Positionssensoren bzw. Lagesensoren benötigt. In Verbindung mit Stellzylindern ist eine Vielzahl derartiger Positionssensoren und Sensoreinrichtungen bekannt, die auf den unterschiedlichsten Messprinzipien beruhen. Diese sind jedoch bei Kontraktionseinheiten der vorstehend genannten Art überwiegend nicht oder nur sehr schlecht geeignet.

Aus der US-A-5 218 280 oder der korrespondierenden DE 689 21 623 T2 ist eine Kontraktionseinheit mit einer Positionssensoreinrichtung bekannt, die aus einem elastischen, leitfähigen Strang besteht. Dieser ist mit elektrisch leitenden zugfesten Fäden versehen, die mit einer elastischen Umhüllung beschichtet sind und erstreckt sich entweder zwischen zwei Armen, die durch die Kontraktionseinheit bewegt werden oder er erstreckt sich über die Wand der Kontraktionseinheit. Der somit ein selbständiges Bauteil darstellende Positionsmessstrang hat den Nachteil, dass die Positionsmessanordnung nach Montage der Kontraktionseinheit und des Messstrangs justiert werden muss. Weiterhin besteht die Gefahr mechanischer Beschädigungen.

Eine Aufgabe der vorliegenden Erfindung besteht somit darin, eine für solche Kontraktionseinheiten gut geeignete und bei hoher Präzision einfach und kostengünstig zu realisierende Positionssensoreinrichtung zu schaffen.

Diese Aufgabe wird erfindungsgemäß durch eine Kontraktionseinheit mit einer Positionssensoreinrichtung gelöst, die die Merkmale des Anspruchs 1 oder des Anspruchs 2 aufweist.

Die Vorteile der erfindungsgemäßen Lösung gemäß Anspruch 1 bestehen insbesondere darin, dass sich ein derartiges elastisches Messobjekt sehr einfach zwischen den Kopfstücken oder in der Wandung des Kontraktionsschlauchs integriert realisieren lässt und sich die Dehnung mit Hilfe einer Dehnungsmesseinrichtung erfassen lässt, wobei die Dehnung des Messobjekts ein Maß für den Abstand zwischen den Kopfstücken der Kontraktionseinheit, also für deren Position ist. Da sowohl die Dehnungsmesseinrichtung als auch das elastische Messobjekt innerhalb des Kontraktionsschlauchs oder in dessen Wandung integriert sind, wird eine kompakte Kontraktionseinheit geschaffen, deren Positionssensoreinrichtung keine zusätzlichen äußeren Elemente erfordert, die Ursache für mechanische Beschädigung oder Störungen sein könnten. Einer der prinzipiellen Vorteile derartiger Kontraktionseinheiten, die vollständige Abdichtung und daher der geringe Verbrauch an Arbeitsfluid, wird durch die Positionssensoreinrichtung nicht beeinträchtigt. Da der Zugstrang aus zwei parallelen Teilsträngen besteht, deren einen Endbereiche elektrisch miteinander verbunden sind und deren anderen Endbereiche mit der Widerstandsmesseinrichtung verbunden sind, muss die elektrische Messeinrichtung in vorteilhafter Weise nur mit einem der beiden Kopfstücke verbunden werden. Alternativ hierzu ist das Messobjekt als zwischen den Kopfstücken gespannter Zugstang aus einem mit ferromagnetischen Partikeln oder Fasern versetzten Kunststoff- oder Gummimaterial ausgebildet, der wenigstens teilweise von einer Spule umgriffen wird, wobei die Dehnungsmesseinrichtung als Induktivitäts-, Frequenz- oder Resonanzmesseinrichtung ausgebildet ist und die Spule einen Teil derselben bildet. Bei der Kontraktion der Kontraktionseinheit erhöht sich der ferromagnetische Anteil der Spule, so dass sich die Induktivität derselben in Abhängigkeit von der Position des einen Kopfstücks relativ zum anderen verändert. Bildet diese Spule einen Teil eines Schwingkreises, so ändert sich dabei deren Frequenz bzw. Resonanzfrequenz. Dabei bildet die Spule zusammen mit dem Kondensator zweckmäßigerweise einen Resonanzschwingkreis.

Bei der alternativen Lösung gemäß Anspruch 2 ist das Messobjekt als Messstrang ausgebildet und besteht aus einem elektrisch leitfähigen Kunststoff- oder Gummimaterial, das in der Wandung des Kontraktionsschlauches integriert ist, wobei die Dehnungsmesseinrichtung wiederum als Widerstandsmesseinrichtung für den Messstrang ausgebildet ist.

Durch die in den Unteransprüchen aufgeführten Maßnahmen sind vorteilhafte Weiterbildungen und Verbesserungen der im Anspruch 1 angegebenen Kontraktionseinheit möglich.

Das Kunststoff- oder Gummimaterial des Messobjekts ist vorzugsweise zur Erzeugung der elektrischen Leitfähigkeit mit elektrisch leitfähigen Partikeln oder Fasern versetzt. Im Falle der Integration des Messstrangs in der Wandung des Kontraktionsschlauches können dabei diese Partikel auch direkt in Bereichen der Wandung, vorzugsweise langgestreckten Bereichen, des Kontraktionsschlauches angeordnet sein.

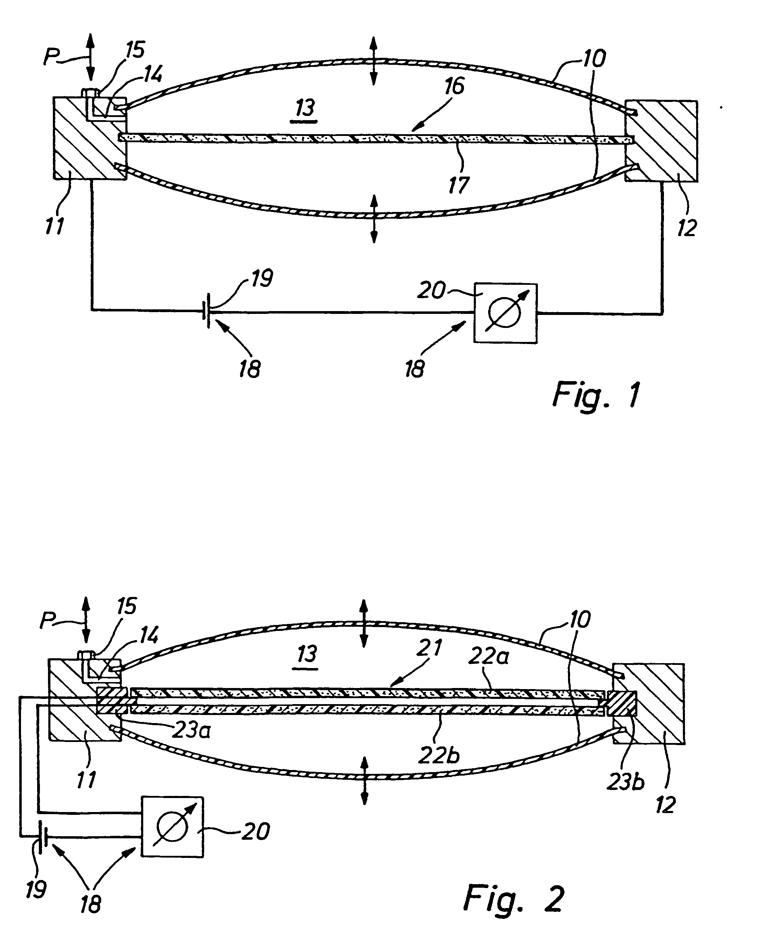

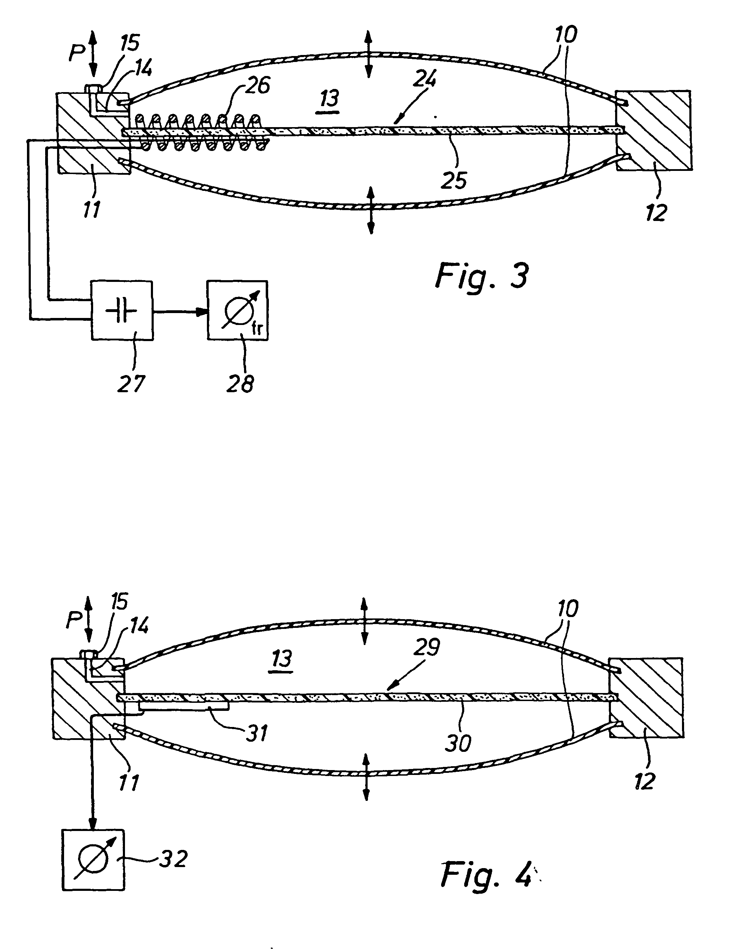

Ausführungsbeispiele der Erfindung sind in den Figuren 2 und 3 dargestellt und in der nachfolgenden Beschreibung näher erläutert, wobei die Figuren 1 und 4 keine Ausführungsbeispiele der Erfindung darstellen. Es zeigen:
- Fig. 1: eine Kontraktionseinheit mit einem zwischen den Kopfstücken gespannten elektrisch leitfähigen Zugstrang,
- Fig. 2: eine ähnliche Anordnung als erstes Ausführungsbeispiel der Erfindung mit einem aus zwei parallelen Teilsträngen bestehenden Zugstrang, deren einen Endbereiche elektrisch miteinander verbunden sind, als zweites Ausführungsbeispiel,
- Fig. 3: ein zweites Ausführungsbeispiel mit einem zwischen den Kopfstücken gespannten, ferromagnetische Partikel oder Fasern enthaltenden Zugstrang und einer Messspule und
- Fig. 4: eine Kontraktionseinheit mit einem Dehnmessstreifen an einem zwischen den Kopfstücken gespannten Zugstrang.

Das in Fig. 1 dargestellte Kontraktionselement ist zur Vereinfachung der Darstellung lediglich schematisch dargestellt. Eine detaillierte Darstellung findet sich beispielsweise in der eingangs genannten DE 29906626 U. Ein Kontraktionsschlauch 10 aus einem elastischen Gummi- oder Kunststoffmaterial ist beidseitig durch Kopfstücke 11, 12 dichtend verschlossen. In der Wandung des Kontraktionsschlauches 10 befindet sich üblicherweise eine zur Vereinfachung nicht dargestellte biegeflexible Strangstruktur. Die Verbindung des Kontraktionsschlauches 10 mit den beiden Kopfstücken 11, 12 erfolgt dergestalt, dass der mit der Strangstruktur versehene Kontraktionsschlauch 10 in der Lage ist, Zugkräfte auf das jeweilige Kopfstück 11, 12 zu übertragen. Die Befestigung kann beispielsweise im Rahmen einer Klemmverbindung erfolgen, wie sie exemplarisch in der EP 0161750 B1 beschrieben ist. Andere Befestigungsarten sind ebenfalls möglich.

In den vom Kontraktionsschlauch 10 und den beiden Kopfstücken 11, 12 begrenzten Innenraum 13 mündet ein Fluidkanal 14, der eines der Kopfstücke 11 durchsetzt und dessen äußeres Ende mit einer Anschlusseinrichtung 15 versehen ist, über die eine von einer Druckquelle kommende Fluidleitung angeschlossen werden kann. Prinzipiell können auch mehrere Fluidkanäle vorgesehen sein. In Verbindung mit einer nicht dargestellten Steuerventilanordnung besteht somit die Möglichkeit, durch den Fluidkanal 16 hindurch ein fluidisches Druckmedium in den Innenraum 13 einzuspeisen oder aus diesem abzuführen.

Fig. 1 zeigt den Kontraktionsschlauch 10 im aktivierten Zustand, also bei druckbeaufschlagtem Innenraum 13. In diesem Zustand ist der Kontraktionsschlauch 10 radial aufgeweitet und gleichzeitig axial kontrahiert, so dass die beiden Kopfstücke 11, 12 einander axial angenähert und zueinander gezogen sind. Im deaktivierten Zustand, also bei drucklosem Innenraum 13, nimmt der Kontraktionsschlauch 10 eine im Wesentlichen hohlzylinderähnliche Gestalt an, und die beiden Kopfstücke 11, 12 entfernen sich voneinander. Auf diese Weise lässt sich durch abgestimmte Fluidbeaufschlagung des Innenraums 13 eine axiale Hubbewegung der Kopfstücke 11, 12 relativ zueinander erreichen.

Als Positionssensoreinrichtung zur Erfassung der Relativposition der beiden Kopfstücke 11, 12 zueinander ist im Innenraum 13 ein als Messobjekt 16 dienender Zugstrang 17 aus einem elektrisch leitfähigen Kunststoff- oder Gummimaterial zwischen den beiden Kopfstücken 11, 12 gespannt. Dieser Zugstrang 17 sollte derart elastisch ausgebildet sein, dass er in allen Arbeitsstellungen des Kontraktionsschlauches 10 gespannt bleibt. Der elektrische Widerstand des Zugstrangs 17 wird durch Anlegen einer Widerstandsmesseinrichtung 18 an den beiden elektrisch leitenden Kopfstücken 11, 12 gemessen. Sollten die Kopfstücke 11, 12 aus nicht-leitendem Material bestehen, so muss auf andere Weise eine Verbindung zu den beiden Endbereichen des Zugstrangs 17 hergestellt werden.

Die Widerstandsmesseinrichtung 18 besteht im einfachsten Falle aus der Reihenschaltung einer Spannungsquelle 19 mit einer Strommesseinrichtung 20. Bei sich erhöhendem elektrischen Widerstand des Zugstrangs 17 sinkt der Strom und steigt bei geringer werdendem Widerstand an. Selbstverständlich können auch andere bekannte Widerstandsmesseinrichtungen verwendet werden.

Das Kunststoff- oder Gummimaterial des Zugstrangs 17 enthält zur Erzeugung der elektrischen Leitfähigkeit elektrisch leitfähige Partikel oder Fasern, beispielsweise aus Metall oder Kohlenstoff. Auch Nanotubes können zur Erzeugung der elektrischen Leitfähigkeit im Zugstrang 17 enthalten sein. Entfernen sich die beiden Kopfstücke 11, 12 voneinander, so wird der Zugstrang 17 länger, bei gleichzeitig sich verringerndem Querschnitt, so dass der elektrische Widerstand ansteigt. Im umgekehrten Falle nimmt er entsprechend ab. Der elektrische Widerstand des Zugstrangs 17 ist somit ein Maß für den Abstand der beiden Kopfstücke 11, 12 voneinander.

Das in Fig. 2 dargestellte erste Ausführungsbeispiel ist der in Fig. 1 dargestellten Kontraktionseinheit sehr ähnlich. Gleiche oder gleichwirkende Bauteile und Elemente sind mit denselben Bezugszeichen versehen und nicht nochmals beschrieben. Auch das erste Ausführungsbeispiel beruht auf einer Widerstandsmessung eines als Messobjekt 21 zwischen den beiden Kopfstücken 11, 12 gespannten Zugstrangs, der aus zwei parallelen Zugsträngen 22a, 22b besteht. Diese Teilzugstränge 22a, 22b sind über isolierende Befestigungen 23a, 23b an den Kopfstücken 11, 12 verankert. Dabei sind die einen Enden der Teilzugstränge 22a, 22b am Kopfstück 12 elektrisch miteinander und die anderen Enden am Kopfstück 11 der beiden Teilzugstränge 22a, 22b mit der Widerstandsmesseinrichtung 18 verbunden, die beispielsweise der des ersten Ausführungsbeispiels entspricht.

Beim ersten Ausführungsbeispiel kann somit die Widerstandsmesseinrichtung 18 an nur ein Kopfstück 11 angeschlossen werden, wobei sich der gemessene Widerstandswert aus der Summe der Widerstandswerte der beiden Teilzugstränge 22a, 22b ergibt.

In Abwandlung der Figuren 1 und 2 kann der Zugstrang 17 bzw. können die Teilzugstränge 22a, 22b auch an der Innenwandung des Kontraktionsschlauchs 10 angebracht oder in der Wandung integriert sein. Die Integration kann zum einen so ausgestaltet werden, dass der oder die Zugstränge als solche in der Wandung des Kontraktionsschlauchs 10 angeordnet sind oder dass lediglich Bereiche der Wandung, beispielsweise langgestreckte, strangartige Bereiche, mit leitfähigen Partikeln oder Fasern versehen sind, so dass die Wandung in diesem Bereich bzw. in diesen Bereichen elektrisch leitfähig wird. Die Enden dieser leitfähigen Bereiche müssen mit der Widerstandsmesseinrichtung kontaktiert werden, entsprechend dem ersten und zweiten Ausführungsbeispiel.

Die leitfähigen Bereiche oder integrierten Stränge in der Wandung des Kontraktionsschlauchs 10 können prinzipiell beliebig verlaufen, wobei zumindest sich in axialer Richtung erstreckende Bereiche vorgesehen sein sollten. Bei mehreren solchen Bereichen können diese elektrisch in Reihe geschaltet sein.

Bei dem in Fig. 3 dargestellten zweiten Ausführungsbeispiel ist das Kontraktionselement wiederum entsprechend den Figuren 1 und 2 ausgebildet. Als Messobjekt 24 ist ein geometrisch entsprechend dem Zugstrang 17 ausgebildeter Zugstrang 25 vorgesehen. Dieser ist bei diesem Ausführungsbeispiel mit ferromagnetischen Partikeln oder Fasern versetzt, so dass er ferromagnetische Eigenschaften besitzt. Wenigstens ein Teilbereich dieses Zugstrangs 25 erstreckt sich durch eine Spule 26 und wirkt wie ein Magnetkern. Diese Spule 26 ist an einem der Kopfstücke 11 isolierend befestigt und bildet zusammen mit einem externen Kondensator 27 einen elektrischen Schwingkreis. Der Kondensator 27 könnte selbstverständlich prinzipiell auch im oder am Kopfstück 11 angeordnet sein. Eine Resonanzmesseinrichtung 28 ist mit diesem Schwingkreis verbunden.

Entfernen sich die Kopfstücke 11, 12 voneinander, so wird der Zugstrang 15 gedehnt, so dass die Zahl der ferromagnetischen Partikel im Bereich der Spule 26 abnimmt. Deren Induktivität verringert sich dadurch. Dies wiederum führt zu einer Veränderung der Frequenz bzw. Resonanzfrequenz des aus dieser Spule 26 und dem Kondensator 27 bestehenden Schwingkreises. Die Schwingkreisfrequenz bzw. Schwingkreis-Resonanzfrequenz wird mit der Resonanzmesseinrichtung 28 erfasst, so dass dadurch indirekt die Dehnung des Zugstrangs 25 und damit der Abstand zwischen den Kopfstücken 11, 12 gemessen wird.

Anstelle einer Resonanzmesseinrichtung 28 kann auch eine andere Frequenzmesseinrichtung oder Induktivitätsmesseinrichtung treten, wobei im letzteren Falle ein externer Kondensator 27 entfallen kann.

Bei der in Fig. 4 dargestellten Kontraktionseinheit ist wiederum als Messobjekt 29 ein Zugstrang 30 zwischen den Kopfstücken 11, 12 gespannt, der im Prinzip dem Zugstrang 17 gemäß Fig. 1 entspricht, jedoch keine elektrisch leitfähigen Partikel enthalten muss. An diesem Zugstrang 30 ist ein Dehnmessstreifen 31 angebracht, der mit einer Dehnungsmesseinrichtung 32 verbunden ist. Hierdurch kann direkt die Dehnung des Zugstrangs 30 und damit der Abstand zwischen den Kopfstücken 11, 12 bestimmt werden.

Anstelle eines Dehnmessstreifens 31 kann auch ein anderer bekannter Dehnungssensor treten, beispielsweise ein magnetoelastischer Sensor. Der Dehnmessstreifen 31 bzw. ein anderer Dehnungssensor kann auch in der Wandung des Kontraktionsschlauches 10 integriert sein, so dass der Zugstrang 30 entfallen kann. Die Dehnung der Wandung des Kontraktionsschlauches 11 ist nämlich ebenfalls ein Maß für den Abstand der Kopfstücke 11, 12 voneinander.

Anstelle eines einzelnen Dehnmessstreifens 31 oder Dehnungssensor können zur Erhöhung der Genauigkeit auch mehrere solcher Sensoren vorgesehen sein.

Gemäß den Ausführungsbeispielen ist das Messobjekt 16, 21 bzw. die Spule 26 und der Dehnmessstreifen 31 über elektrische Leitungen mit einer extern angeordneten Messeinrichtung verbunden. Alternativ hierzu kann die Messwertübertragung auch drahtlos an eine externe Messwertaufbereitungseinrichtung und -auswerteeinrichtung erfolgen. Hierzu können beispielsweise Messobjekte 16, 21, die Spule 26 oder der Dehnmessstreifen 31 mit einem in einem der Kopfstücke 11, 12 angeordneten drahtlosen Übertrager, beispielsweise einem Funkübertrager, verbunden sein, der die jeweiligen Messwerte drahtlos überträgt.

## Patentansprüche

1. Kontraktionseinheit mit einem sich zwischen zwei beabstandeten Kopfstücken (11, 12) erstreckenden und bei Innendruckbeaufschlagung eine Längskontraktion erfahrenden Kontraktionsschlauch (10) und mit einer Positionssensoreinrichtung zur Erfassung des Abstands zwischen den Kopfstücken (11, 12) auf der Basis der Dehnung eines elastischen, elektrisch leitfähigen Messobjekts (21; 24;) mit Hilfe einer Dehnungsmesseinrichtung (18; 26-28), **dadurch gekennzeichnet, dass** sich das als gespannter Zugstrang (22a, 22b; 25) ausgebildete Messobjekt (21; 24) zwischen den Kopfstücken (11, 12) im Innenraum (13) des Kontraktionsschlauchs (10) erstreckt, und dass der Zugstrang (22a, 22b) aus zwei parallelen Teilsträngen aus einem elektrisch leitfähigen Kunststoff- oder Gummimaterial besteht, deren einen Endbereiche elektrisch miteinander verbunden sind und deren anderen Endbereiche mit einer als Widerstandsmesseinrichtung ausgebildeten Dehnungsmesseinrichtung (18) verbunden sind, oder dass der Zugstrang 25 aus einem mit ferromagnetischen Partikeln oder Fasern versetzten Kunststoff oder Gummimaterial besteht, der wenigstens teilweise von einer Spule (26) umgriffen wird, wobei die Dehnungsmesseinrichtung (28) als Frequenz- oder Resonanzmesseinrichtung ausgebildet ist, und die Spule (26) einen Teil derselben bildet.

2. Kontraktionseinheit mit einem sich zwischen zwei beabstandeten Kopfstücken (11, 12) erstreckenden und bei Innendruckbeaufschlagung eine Längskontraktion erfahrenden Kontraktionsschlauch (10) und mit einer Positionssensoreinrichtung zur Erfassung des Abstands zwischen den Kopfstücken (11, 12) auf der Basis der Dehnung eines elastischen, elektrisch leitfähigen Messobjekts mit Hilfe einer Dehnmesseinrichtung (18), **dadurch gekennzeichnet, dass** das Messobjekt in der Wandung des Kontraktionsschlauchs (10) integriert ist.

3. Kontraktionseinheit nach Anspruch 2, **dadurch gekennzeichnet, dass** das Messobjekt als Messstrang ausgebildet ist und in der Wandung des Kontraktionsschlauchs (10) integriert ist, und dass die Dehnmesseinrichtung (18) als Widerstandsmesseinrichtung für den Messstrang ausgebildet ist.

4. Kontraktionseinheit nach einem der Ansprüche 1 bis 3, **dadurch gekennzeichnet, dass** das Kunststoff- oder Gummimaterial des Messobjekts (21; 24) mit die Leitfähigkeit erzeugenden elektrisch leitfähigen Partikeln oder Fasern versetzt ist.

5. Kontraktionseinheit nach Anspruch 3 und 4, **dadurch gekennzeichnet, dass** die elektrisch leitfähigen Partikel oder Fasern direkt in wenigstens einem langgestreckten Bereich der Wandung des Kontraktionsschlauchs (10) angeordnet sind.

6. Kontraktionseinheit nach Anspruch 1, **dadurch gekennzeichnet, dass** die Spule (26) zusammen mit einem Kondensator (27) einen Schwingkreis, insbesondere Resonanzschwingkreis, bildet.

## Claims

1. Contraction unit with a contraction tube (10) extending between two head pieces (11, 12) arranged at a distance from one another and subjected to a longitudinal contraction under internal pressure, and with a position sensor device for detecting the distance between the head pieces (11, 12) based on the expansion of an elastic, electrically conductive measurement object (21; 24) with the aid of a strain gauge (18; 26-28), **characterised in that** the measurement object (21; 42) designed as a taut tension strand (22a, 22b; 25) extends between the two head pieces (11, 12) in the interior (13) of the contraction tube (10), and **in that** the tension strand (22a, 22b) consists of two parallel part-strands made of an electrically conductive plastic or rubber material, one set of end sections being electrically connected to one another while the other set of end sections is connected to a strain gauge (18) designed as a resistance measuring device, or **in that** the tension strand (25) is made of a plastic or rubber material with an addition of ferromagnetic particles or fibres and is at least partially surrounded by a coil (26), the strain gauge (28) being designed as a frequency or resonance measuring device and the coil (26) forming part thereof.

2. Contraction unit with a contraction tube (10) extending between two head pieces (11, 12) arranged at a distance from one another and subjected to a longitudinal contraction under internal pressure, and with a position sensor device for detecting the distance between the head pieces (11, 12) based on the expansion of an elastic, electrically conductive measurement object with the aid of a strain gauge (18), **characterised in that** the measurement object is integrated into the wall of the contraction tube (10).

3. Contraction unit according to claim 2, **characterised in that** the measurement object is designed as a measurement strand and is integrated into the wall of the contraction tube (10), and **in that** the strain gauge (18) is designed as a resistance measuring device for the measurement strand.

4. Contraction unit according to any of claims 1 to 3, **characterised in that** electrically conductive particles or fibres are added to the plastic or rubber material of the measurement object (21; 24) to promote its conductivity.

5. Contraction unit according to claims 3 and 4, **characterised in that** the electrically conductive particles or fibres are directly located in at least one elongated area of the wall of the contraction tube (10).

6. Contraction unit according to claim 1, **characterised in that** the coil (26) together with a capacitor (27) forms an oscillator circuit, in particular a resonant circuit.

## Revendications

1. Unité de contraction comportant un tuyau de contraction (10) s'étendant entre deux pièces de tête (11, 12) espacées et subissant une contraction longitudinale lors de l'action d'une pression intérieure, et comportant un dispositif de détection de position pour détecter la distance entre les pièces de tête (11, 12), sur la base de l'allongement d'un objet de mesure (21 ; 24) électroconducteur et élastique, à l'aide d'un dispositif de mesure d'allongement (18 ; 26-28), **caractérisée en ce que** l'objet de mesure (21 ; 24) réalisé comme une barre de traction (22a, 22b ; 25) tendue s'étend entre les pièces de tête (11, 12) dans le volume intérieur (13) du tuyau de contraction (10), et **en ce que** la barre de traction (22a, 22b) est constituée de deux barres partielles parallèles en une matière plastique ou un matériau du genre caoutchouc électroconducteur, dont une des zones d'extrémité sont reliées électriquement l'une à l'autre et dont les autres des zones d'extrémité sont reliées à un dispositif de mesure d'allongement (18) réalisé comme dispositif de mesure de résistance, ou **en ce que** la barre de traction (25) est constituée d'une matière plastique ou d'un matériau du genre caoutchouc chargé de particules ou de fibres ferromagnétiques, qui est entouré au moins en partie par une bobine (26), le dispositif de mesure d'allongement (28) étant réalisé comme dispositif de mesure de fréquence ou de résonance, et la bobine (26) formant une partie de celui-ci.

2. Unité de contraction comportant un tuyau de contraction (10) s'étendant entre deux pièces de tête (11, 12) espacées et subissant une contraction longitudinale lors de l'action d'une pression intérieure, et comportant un dispositif de détection de position pour détecter la distance entre les pièces de tête (11, 12), sur la base de l'allongement d'un objet de mesure (21 ; 24) électroconducteur et élastique, à l'aide d'un dispositif de mesure d'allongement (18 ; 26-28), **caractérisée en ce que** l'objet de mesure est intégré à la paroi du tuyau de contraction (10).

3. Unité de contraction selon la revendication 2, **caractérisée en ce que** l'objet de mesure est réalisé comme une barre de mesure et est intégré à la paroi du tuyau de contraction (10), et **en ce que** le dispositif de mesure d'allongement (18) est réalisé comme dispositif de mesure de résistance pour la barre de mesure.

4. Unité de contraction selon l'une des revendications 1 à 3, **caractérisée en ce que** la matière plastique ou du genre caoutchouc de l'objet de mesure (21 ; 24) est chargée de particules ou de fibres électriquement conductrices produisant la conductibilité.

5. Unité de contraction selon les revendications 3 et 4, **caractérisée en ce que** les particules ou fibres électriquement conductrices sont disposées directement dans au moins une zone allongée de la paroi du tuyau de contraction (10).

6. Unité de contraction selon la revendication 1, **caractérisée en ce que** la bobine (26) forme avec un condensateur (27) un circuit oscillant, en particulier un circuit oscillant à résonance.
